# EUROPÄISCHE PATENTSCHRIFT

(11) **EP 0 490 334 B1**
(45) Veröffentlichungstag und Bekanntmachung des Hinweises auf die Patenterteilung: **17.05.1995**
(21) Anmeldenummer: 91121158.9
(22) Anmeldetag: 10.12.1991
(51) Int. Cl.: D21F 1/00, B29C 53/12, B65G 15/54

(54) **Doppelspirale, deren Herstellung und deren Verwendung zur Herstellung eines Spiralgliederbandes**
Double helices, their production and their use to produce a helical joining belt
Double spirale, sa fabrication et son utilisation pour la production d'une bande d'éléments spiraux

(30) Priorität: 10.12.1990 DE 4039399
(43) Veröffentlichungstag der Anmeldung: 17.06.1992
(73) Patentinhaber: SITEG Siebtechnik GmbH, D-48683 Ahaus-Alstätte (DE)
(72) Erfinder: Lefferts, Johannes, NL-7544 LM Enschede (NL)
(74) Vertreter: Abitz, Walter, Dr.-Ing.

(56) Entgegenhaltungen:
- EP-A- 0 116 894
- DE-A- 3 003 343
- DE-B- 3 003 344
- DE-C- 77 147
- US-A- 4 090 832

## Beschreibung

Die Erfindung betrifft eine Doppelspirale aus zwei Teilspiralen gleichen Windungssinnes, wobei die Teilspiralen ovalen Querschnitt mit nahezu geraden oberen und unteren Windungsschenkeln und mit gegenüberliegenden Windungsbögen aufweisen und die einander zugewandten Windungsbögen der beiden Teilspiralen einander umgreifen. Die Erfindung betrifft ferner die Herstellung der Doppelspirale durch gleichzeitiges Wickeln von zwei Kunststoffdrähten um einen abgeflachten Dorn sowie die Verwendung der erfindungsgemäßen Doppelspirale zur Herstellung eines Spiralgliederbandes.

Eine Doppelspirale ist aus der EP-A-116 894 bekannt, wobei die Teilspiralen symmetrische Form haben, d. h. die oberen Windungsschenkel verlaufen unter dem gleichen Winkel zur Längsachse der Teilspiralen wie die unteren Windungsschenkel. Derartige Doppelspiralen sind schwierig zu handhaben, da die beiden Teilspiralen die Tendenz haben, ineinanderzurutschen. Zur Herstellung eines Spiralgliederbandes ist es jedoch notwendig, die Teilspiralen gegeneinander seitlich zu versetzen, damit die eine Teilspirale mittels eines Steckdrahtes mit einer Teilspirale der nächsten Doppelspirale verbunden werden kann. Es ist daher notwendig, die beiden Teilspiralen einer Doppelspirale in dem seitlich versetzten Zustand zu fixieren, zum Beispiel durch Aufbringen eines Klebstreifens.

Aus der DE-A-30 47 989 ist es bekannt, zur Vereinfachung des Zusammenfügens von Einzelspiralen zu einem Spiralgliederband die einzelnen Spiralen so auszubilden, daß die einen Windungsschenkel, zum Beispiel die unteren Windungsschenkel, rechtwinklig zur Längsachse verlaufen und die anderen Windungsschenkel, in diesem Fall die oberen Windungsschenkel, gekröpft ausgebildet sind und dadurch im wesentlichen alleine die Steigung der Spiralen bestimmen. Zwei Einzelspiralen mit gleichem oder entgegengesetztem Windungssinn lassen sich dadurch nur noch etwas weniger als die Hälfte ineinanderschieben. Um einen ausreichend breiten Kanal zum Einschieben des Steckdrahtes zu haben, müssen die Spiralen daher so hergestellt werden, daß sie besonders lange Windungsschenkel aufweisen. Dies ist ungünstig, wenn Spiralgliederbänder mit geringer Luftdurchlässigkeit hergestellt werden sollen.

Asymmetrisch gewickelte Einzelspiralen sind auch aus der DE-A-30 01 472 bekannt, wobei sich die besondere Form der Spiralen nur aus der Zeichnung ergibt und nicht erkennbar ist, ob sich daraus eine Vereinfachung beim Zusammenfügen der Einzelspiralen zu einem Spiralgliederband ergibt.

Aus der DE-A-30 03 344 ist ein Verfahren zur gleichzeitigen Herstellung von zwei Einzelspiralen für ein Spiralgliederband bekannt, wobei zwei Kunststoffdrähte mit Hilfe von umlaufenden Fadenführern auf einen still stehenden Wickeldorn gleichsinnig und sich in jeder Windung abwechselnd überkreuzend aufgewickelt werden. Die so hergestellten Spiralen könnten nach dem Aufwickeln seitlich getrennt werden und es wird daher durch die Achse des Wickeldorns gleichzeitig ein Steckdraht in die beiden Einzelspiralen eingeführt, um diese zu verbinden. Die beiden durch den Steckdraht miteinander verbundenen Einzelspiralen werden dann gegen den Steckdraht auseinander gezogen oder um den Steckdraht auseinander geschwenkt und dann mit weiteren Einzelspiralpaaren zu einem Spiralgliederband zusammengefügt. Die Windungsbögen der beiden nach diesem Verfahren hergestellten und miteinander verbundenen Einzelspiralen umgreifen sich nicht, sondern die Einzelspiralen werden ausschließlich durch den eingeführten Steckdraht zusammengehalten. Da die so hergestellten Paare von Einzelspiralen gleichen Windungssinn haben, liegen die einander berührenden Windungsbögen benachbarter Spiralen nicht parallel zueinander, sondern stehen im doppelten Steigungswinkel zueinander. Durch die entgegengesetzte Ausrichtung der ineinandergreifenden Windungsbögen entwickeln derartige Paare von Einzelspiralen einen sehr starken Drall und sind praktisch nicht zu verarbeiten. Außerdem vergrößert sich dadurch der Windungsabstand, d. h. die Steigung der Spiralen, übermäßig, so daß die Klemmung fehlt, die das Zusammenfügen der Spiralen erleichtert. Eine weitere Schwierigkeit ergibt sich bei diesem Verfahren zum Wickeln von Spiralen dadurch, daß die Windungsschenkel unterschiedlich lang sind. Die Windungsschenkel verlaufen unter unterschiedlichen Winkeln zur Längsachse der Spiralen, wobei der unter dem größeren Winkel verlaufende Windungsschenkel noch zusätzlich dadurch einen längeren Weg beschreibt, daß er einen Windungsschenkel der anderen Spirale überkreuzt. Beim Thermofixieren des daraus hergestellten Spiralgliederbandes bewirkt dieser Längenunterschied, daß der Windungsbogen etwas um den Steckdraht herumgezogen wird. Dies führt zu einer starken Verformung und Beschädigung des Steckdrahtes und des Spiraldrahtes. Die nach der DE-A-30 03 344 paarweise hergestellten Einzelspiralen haben außerdem eine zu große Steigung. Bei der Herstellung von Spiralen mit ovalem Querschnitt durch Aufwickeln auf einen Dorn verbreitert sich der Spiraldraht zwangsläufig im Bereich der Windungsbögen, da sich hier wegen der größeren Querabmessung des Dornes die Spannung im zugeführten Spiraldraht kurzzeitig erhöht. Diese Verbreiterungen sind als Kupplungsköpfe an sich erwünscht. Beim Aufwickeln zweier Spiraldrähte auf einen Dorn führt dies jedoch dazu, daß die paarweise hergestellten Spiralen eine Steigung haben, die der doppelten Breite der Kupplungsköpfe entspricht. Manche Verfahren zum Zusammenfügen von Spiralen zu einem Spiralgliederband erfordern jedoch eine zugfedermäßige Vorspannung innerhalb der Spiralen, die wiederum nur möglich ist, wenn die Spiralen eine Steigung von maximal dem doppelten Spiraldrahtdurchmesser haben.

Der Erfindung liegt die Aufgabe zugrunde, die Verwendung von Doppelspiralen zur Herstellung eines Spiralgliederbandes zu ermöglichen, ohne daß die Teilspiralen der Doppelspirale die Neigung haben, ineinander zu rutschen.

Erfindungsgemäß wird diese Aufgabe durch die Merkmale des Anspruches 1 gelöst, wobei das Verfahren zur Herstellung der erfindungsgemäßen Doppelspirale Gegenstand des Anspruches 4 ist und die Verwendung der erfindungsgemäßen Doppelspirale bei der Herstellung eines Spiralgliederbandes Gegenstand des Anspruches 5 ist.

Die durch die Erfindung erzielbaren Vorteile bestehen insbesondere darin, daß die Kapazität bestehender Spiralherstellungseinrichtungen durch geringfügige Umbauten wesentlich erhöht werden kann und Spiralgliederbänder mittels der erfindungsgemäßen Doppelspiralen schneller und einfacher hergestellt werden können.

Bevorzugte Ausgestaltungen der Erfindung sind Gegenstand der Unteransprüche.

Die Doppelspirale besteht vorzugsweise aus Monofilamenten aus Thermoplasten mit einem Schmelzbereich über 150 Grad Celsius. Der vorzugsweise Durchmesser liegt zwischen 0,2 mm und 2,0 mm. Die Monofilamente haben im allgemeinen kreisrunde Form. Sie können je nach den technischen Anforderungen des Endproduktes jedoch auch rechteckigen, rechteckigen mit abgerundeten Kanten, ellipsenförmigen oder hantelförmigen Querschnitt haben. Das Monofil kann aus mehreren Komponenten mit mindestens einer thermoplastischen Komponente bestehen.

Ausführungsbeispiele der Erfindung werden nachfolgend anhand der Zeichnung näher erläutert. Es zeigen
- Fig. 1: einige Windungen einer Doppelspirale von oben betrachtet;
- Fig. 2: ein kurzes Stück einer Doppelspirale in perspektivischer Darstellung;
- Fig. 3: die Lage der Windungen beim Aufwickeln auf einen Dorn von gleichmäßigem Querschnitt;
- Fig. 4: die Lage der Windungen beim Aufwickeln auf einen Dorn mit sich verjüngendem Querschnitt und
- Fig. 5: die Vorrichtung zum Zusammenfügen mehrerer Doppelspiralen zu einem Spiralgliederband.

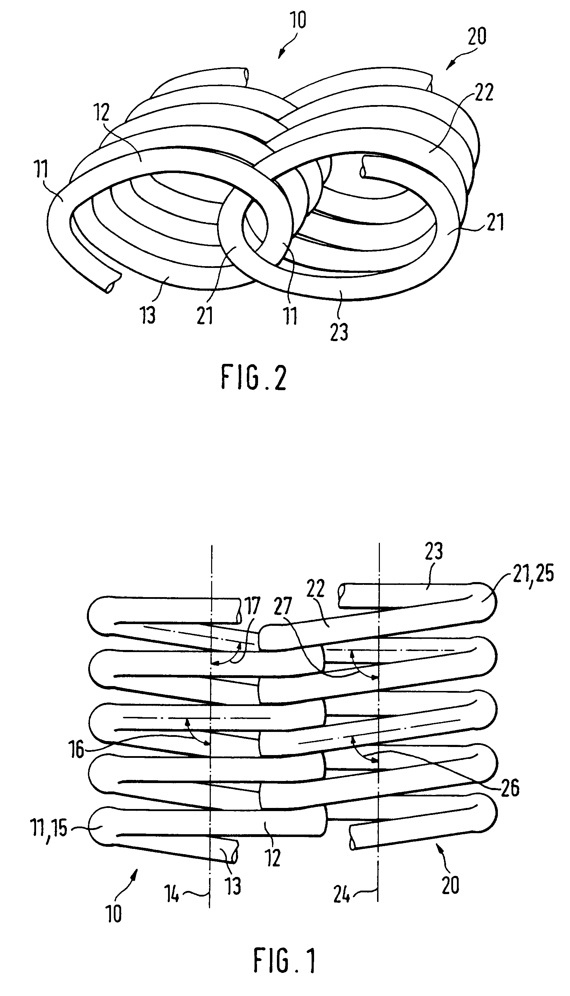

Gemäß Fig. 1 besteht die Doppelspirale aus einer ersten Teilspirale 10 und aus einer zweiten Teilspirale 20. Die Teilspiralen 10, 20 bestehen jeweils aus einer Anzahl Windungen, die sich aus etwa halbkreisförmigen Windungsbögen 11, 21 zusammensetzen, die durch obere Windungsschenkel 12, 22 und untere Windungsschenkel 13, 23 verbunden sind (Fig. 2).

Die Steigung der Teilspiralen 10, 20 ist ungleichförmig. Bei der ersten Teilspirale 10 haben die oberen Windungsschenkel 12 nahezu keine Steigung, d. h. sie liegen in einer Normalebene zur Längsachse 14. Die unteren Windungsschenkel 13 haben dagegen eine um so größere Steigung und nahezu die gesamte Steigung konzentriert sich auf die unteren Windungsschenkel 13. Innerhalb der Windungsbögen 11 hat die Steigung Zwischenwerte. Der Winkel 16, unter dem die oberen Windungsschenkel 12 zur Längsachse 14 verlaufen, ist also größer als der Winkel 17, unter dem die unteren Windungsschenkel 13 zur Längsachse 14 der Teilspirale 10 verlaufen. Der Winkel 16 beträgt im Idealfall 90°.

In der zweiten Teilspirale 20 sind die Verhältnisse umgekehrt, d. h., die Steigung ist in den unteren Windungsschenkeln 23 minimal und konzentriert sich nahezu ausschließlich auf die oberen Windungsschenkel 22. Der Winkel 16 unter dem die oberen Windungsschenkel 22 zur Längsachse 24 verlaufen, ist damit kleiner als der Winkel 27, unter dem die unteren Windungsschenkel 23 verlaufen. Der Winkel 27 beträgt im Idealfall wiederum 90°.

Die einander zugewandten Windungsbögen 11, 21 der beiden Teilspiralen 10, 20 umschlingen oder umgreifen einander. Diese Umschlingung oder Umgreifung erfordert keine besondere Verformung der Windungsbögen 11, 21, da in den Windungsbögen 11, 21 eine Steigung vorhanden ist und die Windungsbögen 11, 21 an der Berührungsstelle der beiden Teilspiralen 10, 20 unter dem doppelten Steigungswinkel zueinander verlaufen. Dies ist eine Folge des gleichen Windungssinnes der beiden Teilspiralen 10, 20. Bei dem üblichen Aufbau von Spiralgliederbändern wie er aus der DE-A-29 38 221 bekannt ist, haben benachbarte Spiralen dagegen entgegengesetzten Windungssinn, so daß die einander berührenden Windungsbögen in einer Ebene liegen und reißverschlußartig ineinander geschoben und mit einem Steckdraht gekuppelt werden können.

Im Bereich der Windungsbögen 11, 21 ist der Spiraldraht abgeflacht, das heißt, der Querschnitt des Spiraldrahtes ist in Richtung der Längsachsen 14, 24 der Teilspiralen 10, 20 verbreitert. Die Windungsbögen 11, 21 besitzen dadurch Kupplungsköpfe 15, 25. Mittels der Kupplungsköpfe 15, 25 können zwei Doppelspiralen miteinander in Eingriff gebracht werden, wobei der durch die Kupplungsköpfe 15, 25 bewirkte Formschluß die Doppelspiralen ausreichend gut zusammenhält, um ohne Schwierigkeiten den Steckdraht in der gewohnten Weise einführen zu können. Die Teilspiralen benachbarter Doppelspiralen müssen dabei jedoch entgegengesetzten Windungssinn haben.

Das Zusammenfügen der erfindungsgemäßen Doppelspiralen zu einem Spiralgliederband erfolgt im wesentlichen in der gleichen Weise wie es aus der DE-A-29 38 221 für Einzelspiralen bekannt ist, wobei lediglich anstelle einer Einzelspirale eine Doppelspirale verwendet wird. Das Spiralgliederband aus erfindengsgemäßen Doppelspiralen, die mittels Steckdrähten verbunden sind, wird in der üblichen Weise thermofixiert. Die dabei ausgeübte hohe Längsspannung hat in Verbindung mit der durch die Erwärmung bedingten Erweichung des Spiraldrahtmaterials zur Folge, daß sich die Steigung innerhalb der Teilspiralen 10, 20 vergleichmäßigt, so daß im fertigen Spiralgliederband die oberen Windungsschenkel 12, 22 und die unteren Windungsschenkel 13, 23 nahezu die gleiche Steigung einnehmen und unter gleichen Winkeln zur Längsachse 14, 24 verlaufen. Bei einem Verlauf unter kleinem Winkel haben die Windungsschenkel eine größere Länge als bei einem Verlauf unter großem Winkel. Um zu verhindern, daß sich beim Thermofixieren diese unterschiedliche Länge durch ein Verschieben der Windungsbögen 11, 21 um die Steckdrähte und um die Windungsbögen der anderen Teilspirale der Doppelspirale auszugleichen versucht, haben die Teilspiralen 10, 20 vorzugsweise bereits bei der Herstellung eine solche Form, daß die oberen Windungsschenkel 12, 22 und die unteren Windungsschenkel 13, 23 trotz der unterschiedlichen Winkel unter denen sie zu Längsachse 14, 24 verlaufen, gleiche Länge haben. Dieser Längenausgleich wird dadurch erreicht, daß die oberen Windungsschenkel 12 der ersten Teilspirale 10 und die unteren Windungsschenkel 23 der zweiten Teilspirale 20, also die unter dem größeren Winkel zur Längsachse 14, 24 verlaufenden Windungsschenkel leicht gebogene oder gekrümmte Form haben. Dies kann durch eine entsprechende Formgebung des Dorns bei der Herstellung der erfindungsgemäßen Doppelspirale erreicht werden.

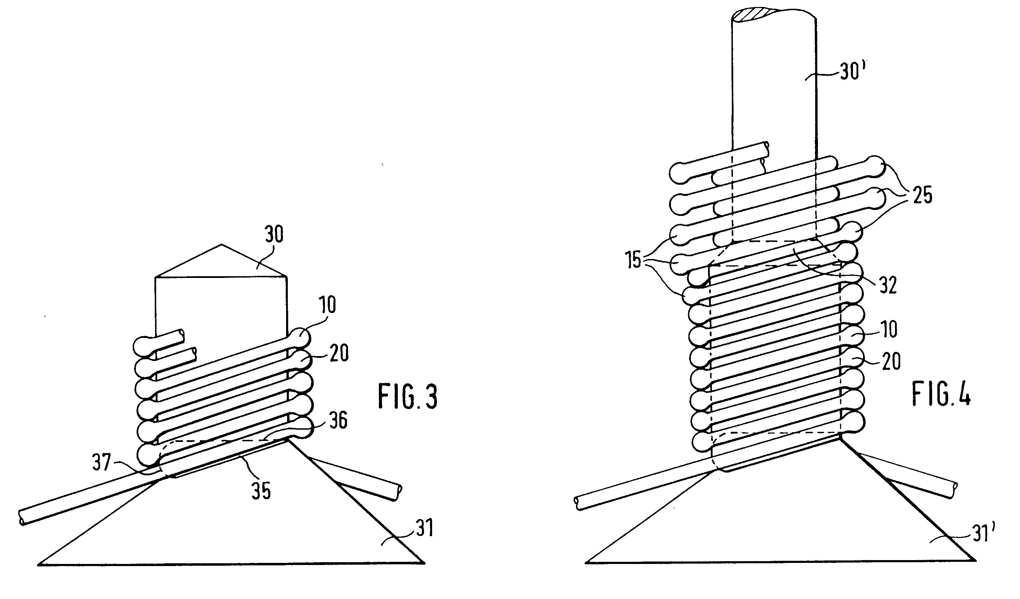

Zur Herstellung der erfindungsgemäßen Doppelspirale werden zwei Kunststoffdrähte, im allgemeinen Polyestermonofilamente mit einem Durchmesser im Bereich von 0,5 bis 1,0 mm, nebeneinander einem sich drehenden Dorn zugeführt oder um einen feststehenden Dorn 30 herumgewickelt. Zur Erzielung der ovalen Querschnittsform der Teilspiralen hat der Dorn einen entsprechend abgeflachten Querschnitt. Die Abflachung auf den gegenüberliegenden Seiten des Dorns 30 ist dabei unterschiedlich, um die oben erwähnte Krümmung oder Wölbung derjenigen Windungsschenkel 13 und 22 zu erzielen, die unter dem größeren Winkel zur Längsachse 14, 24 verlaufen. Dabei erhöht sich die Zugspannung innerhalb der zugeführten Kunststoffdrähte jeweils, wenn die längere Querschnittsabmessung des Dorns parallel zur Richtung der zugeführten Kunststoffdrähte liegt, was zur Ausbildung der verbreiterten Kupplungsköpfe 15, 25 in den Teilspiralen 10, 20 führt. Zur Erzielung der unterschiedlichen Steigungen in den Windungsschenkeln ist der Dorn 30 so ausgeführt, daß an den gegenüberliegenden, abgeflachten Seiten des Dorns 30 der Spiraldraht jeweils mit keiner beziehungsweise mit doppelter Steigung im Vergleich zu einem Dorn, der zur Herstellung von Spiralen mit gleichmäßiger Steigung dient, aufgewickelt wird. Dazu genügt es, die Form des stark konischen Dornfußes 31 so zu ändern, daß die Schnittlinie zwischen dem konischen Dornfuß 31 und dem Dorn 30 nicht in einer Ebene senkrecht zur Dornachse liegt, sondern so wie in Fig. 3 gezeigt, auf der einen abgeflachten Seite 35 des Dorns 30 unter einem Winkel von etwa 20°, während auf der anderen, abgeflachten Seite 36 (in Fig. 3 durch unterbrochene Linie dargestellt) so wie bisher rechtwinklig zur Dornachse. Diese beiden Schnittlinien sind dann auf einer der beiden sehr stark gekrümmten Seiten des Dorns 30 durch eine stark ansteigende Schnittlinie 37 verbunden. Die beiden Spiraldrähte werden so zugeführt bzw. so gewickelt, daß sie auf den konischen Dornfuß 31 auftreffen und entlang diesem zum Dorn 30 rutschen. Der bereits auf dem Dorn 30 aufgewickelte Teil der Spirale wird durch die jeweils neu hinzukommenden Windungen weitergeschoben (in Fig. 3 nach oben).

Die Steigung der Teilspiralen 10, 20 wird durch die Breite der Kupplungsköpfe 15, 25 bestimmt und würde dadurch bei dem üblichen Herstellungsverfahren der Spiralen mehr als das Doppelte des Spiraldrahtdurchmessers betragen. Dies kann nachteilig sein für das spätere Zusammenfügen mehrerer Doppelspiralen zu einem Spiralgliederband. Bei einer derart großen Steigung der Teilspiralen würden sich die Kupplungsköpfe 15, 25 benachbarter Doppelspiralen nämlich nicht gegenseitig klemmen (Fig. 3), so daß sich die Doppelspiralen vor dem Einschieben des Steckdrahtes trennen könnten. Um trotz der Kupplungsköpfe 15, 25 eine Steigung in den Teilspiralen 10, 20 zu erreichen, die gleich dem doppelten Spiraldrahtdurchmesser ist, wird ein sich verjüngender Dorn 30' verwendet. Zweckmäßig wird die Durchmesserverjüngung durch eine konische Stufe 32 erreicht. Die Teilspiralen verrutschen dann auf dem Dorn so gegeneinander, daß die Kupplungsköpfe 15, 25 in die Hohlräume der jeweils anderen Teilspirale 10, 20 fallen (Fig. 4). Die Steigung der Teilspiralen wird dadurch kleiner als die Breite der Kupplungsköpfe 15, 25, so daß beim Ineinanderfügen zweier Doppelspiralen eine genügende Klemmung, das heißt ein ausreichender Formschluß zwischen den Kupplungsköpfen 15, 25 besteht. Voraussetzung für die Erzielung einer Steigung der Teilspiralen 10, 20, die kleiner ist als die doppelte Breite der Kupplungsköpfe 15, 25, ist dabei, daß die beiden Teilspiralen parallel aufgewickelt werden und sich - anders als bei dem aus der DE-A-30 03 344 bekannten Verfahren - die Windungsschenkel nicht überkreuzen.

Nach dem Ablaufen vom Dorn hat die Doppelspirale noch nicht die in den Fig. 1 und 2 gezeigte Form, sondern die beiden Teilspiralen 10, 20 liegen ineinander, das heißt ihre Längsachsen 14, 24 fallen zusammen. Die Eigenschaft, daß sich die beiden Teilspiralen 10, 20 spontan seitlich gegeneinander versetzen, hat die erfindungsgemäße Doppelspirale erst dann, wenn eine der beiden Teilspiralen 10, 20 eine halbe Drehung um ihre Längsachse 14 bzw. 24 gedreht wird, so daß die unter dem größeren Winkel zur Längsachse verlaufenden Windungsschenkel der beiden Teilspiralen auf entgegengesetzten Seiten liegen, wie dies in Fig. 1 dargestellt ist. Nach dem Ablaufen vom Dorn ist der Querschnitt der Teilspiralen 10, 20 außerdem nicht oval sondern elliptisch. Die Windungsschenkel 12, 13; 22, 23 sind also nicht gerade sondern leicht nach außen gebogen.

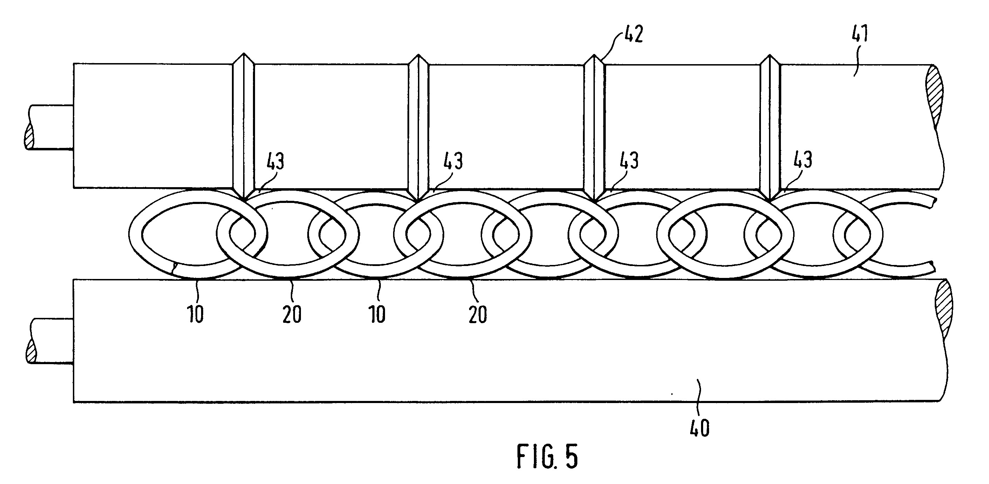

Das Zusammenfügen der Spiralen wird durch die Verwendung von Doppelspiralen wesentlich einfacher als bei Einzelspiralen. Der Grund dafür liegt darin, daß Doppelspiralen bereits durch das Herstellungsverfahren die für das Zusammenfügen notwendige Teilung besitzen. Einzelspiralen, die nach einem herkömmlichen Verfahren (DE-A-3 127 149; DE-A-3 017 378) Windung an Windung gewickelt werden, müssen zunächst paarweise durch einen Schließspalt gezogen werden, wobei sie sorgfältig und gleichmäßig gestreckt werden, damit die benötigte Teilung erreicht wird, bei der die Steigung der Spiralen etwa dem doppelten Steckdrahtdurchmesser entspricht und sich die Windungsbögen der beiden Spiralen kämmend ineinanderfügen. Beim erfindungsgemäßen Verfahren entfällt der Schließspalt. Die Vorrichtung zum Zusammenfügen mehrerer Doppelspiralen zu einem Spiralgliederband weist eine glatte Unterwalze 40 und eine mit Umfangswülsten 42 ausgebildete Oberwalze 41 auf (Fig. 5). Die Unterwalze 40 und die Oberwalze 41 sind parallel zueinander gelagert und bilden einen Walzenspalt, der der kleineren Querabmessung der Teilspiralen 10, 20 entspricht, so daß die Doppelspiralen mit Reibungseingriff durch den Walzenspalt geführt werden können. Der Abstand der Umfangswülste 42 der Oberwalze 41 entspricht der Teilung der Doppelspiralen im Spiralgliederband (Längeneinheit/Anzahl der Doppelspiralen). Der Anfang jeder Doppelspirale wird aufgeklappt und so in den Walzenspalt eingeführt, daß einer der Umfangswülste 42 in die Rinne 43 eingreift, die sich zwischen den beiden Teilspiralen 10, 20 bildet. Abwechselnd werden dabei linksgängige und rechtsgängige Doppelspiralen eingelegt. Wenn die Doppelspiralen im Betrieb dann durch den Walzenspalt laufen, klappen die Doppelspiralen fortschreitend selbsttätig auf. Im übrigen läuft das Verfahren ähnlich wie das aus der DE-A-3 017 378 oder der DE-A-3 127 149 ab. Wie bei den bekannten Verfahren werden die Doppelspiralen abwechselnd leicht von oben und leicht von unten zugeführt, damit die Windungsbögen benachbarter Doppelspiralen sich überlappend in den Walzenspalt einlaufen und im Walzenspalt durch vertikale Kräfte ineinandergedrückt werden. Wie bei den bekannten Verfahren werden dann in den Kanal, der durch die sich überlappenden Windungsbögen benachbarter Spiralen gebildet wird, jeweils ein Steckdraht eingeschoben. Beim erfindungsgemäßen Verfahren wird dabei vorzugsweise auch in den Kanal, der durch die einander umschlingenden Windungsbögen der beiden Teilspiralen einer Doppelspirale gebildet wird, ein Steckdraht eingeschoben, so daß insgesamt die Anzahl der Steckdrähte gleich der Anzahl der Teilspiralen ist. Für den Zusammenhalt des Spiralgliederbandes sind diese Steckdrähte jedoch nicht erfoderlich und wenn z.B. eine besonders große Durchlässigkeit des Spiralgliederbandes angestrebt wird, können die Steckdrähte innerhalb der Teilspiralen, die eine Doppelspirale bilden, entfallen, so daß dann die Anzahl der Steckdrähte gleich der Anzahl der Doppelspiralen ist.

### Beispiel:

Ein Polyester-Monofil mit einem Durchmesser von O,6 mm wird als Spiraldraht verwendet. Zwei solche Spiraldrähte werden parallel auf den in Fig. 4 gezeigten Dorn zu einer Doppelspirale von ovalem Querschnitt aufgewickelt, wobei der längere Durchmesser 5,4 mm und der kürzere Durchmesser 3,2 mm beträgt. Der Dorn 30 hat einen Querschnitt von 4,7 x 1,8 mm, der sich nach einer Länge von 5 mm durch eine konische Stufe unter einem Winkel von 45°auf 3,4 x 1,5 mm verjüngt. Jeweils 32 derartiger Doppelspiralen werden mittels der in Fig. 5 gezeigten Fügevorrichtung zusammengefügt, wobei der Wulstabstand auf der oberen Walze 6,1 mm beträgt. Die Gruppe aus 32 Doppelspiralen wird durch Einschieben von 31 Steckdrähten in Form eines Polyester-Monofils von 0,9 mm Durchmesser miteinander verbunden und aus derartigen 32ergruppen wird ein Spiralgliederband mit 16,5 Doppelspiralen/100 mm hergestellt. Durch das Thermofixieren hat sich die Spiraldichte auf 13,5 Doppelspiralen/100 mm verringert.

## Patentansprüche

1. Doppelspirale mit zwei Teilspiralen (10; 20) von gleichem Windungssinn, wobei die Teilspiralen (10; 20) ovalen Querschnitt mit nahezu geraden oberen und unteren Windungsschenkeln (12, 13; 22, 23) und mit gegenüberliegenden Windungsbögen (11; 21) aufweisen und die einander zugewandten Windungsbögen (11; 21) der beiden Teilspiralen (10; 20) einander umgreifen, dadurch gekennzeichnet, daß die oberen Windungsschenkel (12; 22) der Teilspiralen (10; 20) unter einem anderen Winkel zur Längsachse (14; 24) der Teilspiralen (10; 20) verlaufen als die unteren Windungsschenkel (13; 23) der jeweiligen Teilspirale (10; 20) und daß die oberen Windungsschenkel (12) der einen Teilspirale (10) unter dem gleichen Winkel zur Längsachse (14) verlaufen wie die unteren Windungsschenkel (23) der anderen Teilspirale (20) und umgekehrt.

2. Doppelspirale nach Anspruch 1, dadurch gekennzeichnet, daß die Steigung der Teilspiralen (10; 20) gleich der doppelten Drahtstärke ist.

3. Doppelspirale nach Anspruch 1 oder 2, dadurch gekennzeichnet, daß die unter dem größeren Winkel verlaufenden Windungsschenkel (13; 23) zur Erzielung gleicher Längen der oberen und unteren Windungsschenkel (12, 13; 22, 23) leicht gebogen sind.

4. Verfahren zur Herstellung einer Doppelspirale nach einem der Ansprüche 1 bis 3, dadurch gekennzeichnet, daß die beiden Spiraldrähte parallel um einen sich verjüngenden Dorn gewickelt werden.

5. Verwendung einer Doppelspirale nach einem der Ansprüche 1 bis 3 zur Herstellung eines Spiralgliederbandes, dadurch gekennzeichnet, daß die Teilspiralen benachbarter Doppelspiralen entgegengesetzten Windungssinn haben und die Windungsbögen einer Teilspirale der einen Doppelspirale mit den Windungsbögen einer Teilspirale der anderen Doppelspirale reißverschlußartig in Eingriff gebracht werden und durch den dabei gebildeten Kanal ein Steckdraht eingeführt wird.

## Claims

1. Double helix comprising two partial helices (10; 20) having the same winding direction, said partial helices (10; 20) having oval cross section with almost straight upper and lower winding legs (12, 13; 22, 23) and oppositely disposed winding arcs (11; 21), the mutually facing winding arcs (11; 21) of the two partial helices (10; 20) encircling each other, characterized in that the upper winding legs (12; 22) of the partial helices (10; 20) extend at a different angle with respect to the longitudinal axis (14; 24) of the partial helices (10; 20) than the lower winding legs (13; 23) of the respective partial helix (10; 20), and that the upper winding legs (12) of the one partial helix (10) extend at the same angle with respect to the longitudinal axis (14) as the lower winding legs (23) of the other partial helix (20), and vice versa.

2. Double helix according to claim 1, characterized in that the pitch of the partial helices (10; 20) is equal to twice the wire diameter.

3. Double helix according to claim 1 or 2, characterized in that the winding legs (13; 23) extending at the wider angle are slightly bent to attain equal lengths of the upper and lower winding legs (12, 13; 22, 23).

4. Method for the production of a double helix according to one of claims 1 to 3, characterized in that the two helix wires are wound in parallel around a tapering mandrel.

5. Use of a double helix according to one of claims 1 to 3, for the production of a spiral link belt, characterized in that the partial helices of adjacent double helices have opposite winding direction, and the winding arcs of one partial helix of the one double helix are engaged in zipper fashion with the winding arcs of a partial helix of the other double helix, and a pintle wire is inserted through the channel thereby formed.

## Revendications

1. Double spirale avec deux spirales partielles (10; 20) ayant le même sens de torsion, les spirales partielles (10; 20) présentant une section ovale avec des branches de spire (12, 13; 22, 23) supérieures et inférieures pratiquement droites et avec des arcs de spire (11; 21) opposés et les arcs de spire (11; 21) tournés l'un vers l'autre des deux spirales partielles (10; 20) étant enveloppés l'un dans l'autre, caractérisée en ce que les branches de spire (12; 22) supérieures des spirales partielles (10; 20) forment un autre angle avec l'axe longitudinal (14; 24), des spirales partielles (10; 20) que les branches de spire (13; 23) inférieures de la spirale partielle (10; 20) respective et en ce que les branches de spire (12) supérieures d'une spirale partielle (10) forment le même angle par rapport à l'axe longitudinal (14) que les branches de spire (23) inférieures de l'autre spirale partielle (20) et inversement.

2. Double spirale selon la revendication 1, caractérisée en ce que le pas des spirales partielles (10; 20) est égal au double de l'épaisseur du fil.

3. Double spirale selon la revendication 1 ou 2, caractérisé en ce que les branches de spire (13; 23) se présentant sous l'angle maximum sont légèrement recourbées pour obtenir des longueurs identiques pour les branches de spire (12, 13; 22, 23) supérieures et inférieures.

4. Procédé pour la fabrication d'une double spirale selon l'une des revendications 1 à 3, caractérisé en ce que les deux fils en spirale sont enroulés parallèlement autour d'un mandrin allant en se rétrécissant.

5. Utilisation d'une double spirale selon l'une des revendications 1 à 3 pour la fabrication d'une bande d'éléments spiraux, caractérisé en ce que les spirales partielles de doubles spirales voisines ont un sens d'enroulement opposé, les arcs de spire d'une spirale partielle d'une double spirale s'engrènent avec les arcs de spire d'une spirale partielle de l'autre double spirale à la façon d'une fermeture éclair et un fil enfichable est introduit par le conduit ainsi constitué.
